Europäisches Patentamt

European Patent Office

Office européen des brevets

(19)

(11) **EP 0 980 303 B1**

(12) **FASCICULE DE BREVET EUROPEEN**

(45) Date de publication et mention
de la délivrance du brevet:
**18.09.2002 Bulletin 2002/38**

(51) Int Cl.⁷: **B28D 5/04**

(86) Numéro de dépôt international:
**PCT/IB98/00180**

(21) Numéro de dépôt: **98901445.1**

(22) Date de dépôt: **13.02.1998**

(87) Numéro de publication internationale:
**WO 98/050209 (12.11.1998 Gazette 1998/45)**

(54) **DISPOSITIF DE SCIAGE PAR FIL POUR LA DECOUPE DE TRANCHES FINES UTILISANT LE CROISEMENT ANGULAIRE D'AU MOINS DEUX NAPPES DE FILS**

DRAHTSÄGE ZUM SCHNEIDEN VON DÜNNEN SCHEIBEN MITTELS WENIGSTENS ZWEI EINANDER SCHNEIDENDEN SÄGEDRAHTGEWEBEN

SLICING DEVICE USING YARN FOR CUTTING THIN WAFERS USING THE ANGULAR INTERSECTION OF AT LEAST TWO YARN LAYERS

(84) Etats contractants désignés:
**CH DE FR GB IT LI**

(30) Priorité: **07.05.1997   CH 106797**

(43) Date de publication de la demande:
**23.02.2000   Bulletin 2000/08**

(73) Titulaire: **HCT Shaping Systems SA**
**1033 Cheseaux (CH)**

(72) Inventeur: **HAUSER, Charles**
**CH-1272 Genolier (CH)**

(74) Mandataire: **Micheli & Cie**
**Rue de Genève 122,**
**Case Postale 61**
**1226 Genève-Thonex (CH)**

(56) Documents cités:
**EP-A- 0 406 019       EP-A- 0 745 464**
**WO-A-91/12915        WO-A-97/32681**
**DE-A- 19 517 107     DE-C- 154 646**
**JP-A- 61 288 995     US-A- 4 608 893**

**Description**

La présente invention concerne un dispositif de sciage par fil comprenant au moins deux cylindres guide-fils supportant un fil maintenu en position grâce à des gorges prévues sur la surface desdits cylindres guide-fils qui définissent l'intervalle entre les fils d'une nappe de fils, le fil étant susceptible de se déplacer selon un mouvement alternatif ou continu en appui contre une pièce à scier fixée sur une table support, l'enroulement du fil autour des cylindres guide-fils générant au moins deux nappes de fils qui se croisent au moins selon une ligne avec un angle non nul, le fil étant enroulé sur chacun des cylindres guide-fils sur 120° au moins de la circonférence du cylindre.

Lors de la découpe en tranches fines de la pièce à scier, le fil tendu est à la fois guide et tracté par les cylindres guide-fils. Ces cylindres guide-fils généralement revêtus d'une couche synthétique sont gravés avec des gorges dont la géométrie et les dimensions doivent être d'une grande précision. Le fil est enroulé en spirale autour de deux ou plusieurs cylindres guide-fils et forment entre deux cylindres guide-fils au moins une nappe de fils parallèles dont la distance entre deux fils consécutifs fixe l'épaisseur des tranches. En raison de l'enroulement en spirale, tous les fils de la nappe de fils se déplacent parallèlement générant un effort perpendiculaire à l'avance de la table support et induisant des efforts de cisaillement et de torsion sur le mécanisme de tenue de la pièce à scier. Ces efforts sont fonction de la vitesse de sciage et des dimensions de la pièce à scier et peuvent aller jusqu'à l'arrachage de la pièce à scier de son support. Les tensions produites à la base de la pièce à scier induisent des déformations qui, après sciage, se retrouvent sous forme d'un voilage des tranches obtenues. De plus, le plan de la nappe de fils est dans les dispositifs connus, tel que, par exemple, celui décrit dans le document WO 91/12915, généralement perpendiculaire à la direction de sciage, ce qui peut induire des ondulations sur la surface des tranches en cas de mouvement général de la nappe de fils résultant d'oscillations thermiques par exemple. Ces ondulations, même de quelques micromètres, suffisent à rendre les tranches inutilisables pour certaines applications telles que du silicium pour l'industrie des semi-conducteurs.

Le document JP 61-288995 décrit un dispositif comportant les caractéristiques figurant dans le préambule de la revendication indépendante. Dans ce dispositif connu, l'enroulement du fil autour des cylindres guide-fils génère deux nappes de fils qui se croisent avec un angle non nul. Pour obtenir un parallélisme entre les fils d'une nappe par rapport à ceux de l'autre nappe suivant la direction de déplacement de la pièce à scier, le dispositif connu comprend une série de galets de guidage intercalés entre les cylindres guide-fils.

La présence de ces galets rend la construction compliquée et d'un encombrement général plus grand. Des efforts considérables sont en outre générés au niveau de ces galets de guidage qui subissent une usure rapide.

La présente invention a pour but de remédier à ces inconvénients et de créer un dispositif de sciage à au moins deux nappes de fils croisés et qui permet d'obtenir des tranches sciées à surfaces parallèles et planes sans l'usage de galets de guidage.

Le dispositif conformément à la présente invention est caractérisé à cet effet par le fait qu'il comprend des moyens pour effectuer un déplacement relatif entre la pièce à scier et les nappes de fils suivant une direction de déplacement relatif et des moyens de réglage pour régler l'angle d'inclinaison compris entre ladite direction dudit déplacement relatif et une perpendiculaire à un plan de travail dans lequel sont contenus les axes de deux cylindres guide-fils voisins, cet angle d'inclinaison étant déterminé et ajusté de façon à obtenir des tranches à faces parallèles.

Par ces caractéristiques, on obtient un dispositif de sciage d'une construction peu compliquée et d'un encombrement général réduit, tout en permettant le sciage de tranches à surfaces parallèles et planes. En réglant de façon précise ledit angle d'inclinaison un parallélisme parfait des faces des tranches sciées peut être obtenu sans le concours de galets de guidage.

On utilise ainsi au moins deux nappes de fils faisant un angle suffisant avec la direction de découpe. Le croisement des nappes améliorera le problème des ondulations puisque celles-ci ne seront plus parallèles mais seront angulairement différentes de part et d'autre des tranches obtenues, ce qui donne la possibilité d'une correction subséquente par lappage ou par rectification. L'utilisation de deux guide-fils selon un mode d'exécution préféré dans le dispositif de sciage par fil permet de réaliser d'une manière simple, par un enroulement du fil croisé en forme de huit entre les deux guide-fils, les deux directions de sciage avec un angle suffisant pour créer l'effet requis pour diminuer le problème d'ondulations éventuelles. Il est particulièrement important de relever que dans cette configuration, les efforts de cisaillement induits sur le support par les deux nappes ayant des directions angulaires différentes de la direction de sciage, donc de l'avance de la table support, sont considérablement réduits. De plus, la position angulaire des nappes de fils par rapport au déplacement de la table support, donc de la pièce à scier, diminue la pression de coupe sur la surface de la pièce à scier et permet ainsi une plus grande vitesse de découpe, augmentant du même coup la productivité du dispositif de sciage par fil. L'angle nécessaire entre les deux nappes doit être d'au moins 20° si l'on veut obtenir un effet de croisement sensible. Toutefois, au delà de 90° le temps de découpe commence à diminuer l'intérêt économique des nappes croisées.

Du fait que le fil est enroulé sur chacun des cylindres guide-fils sur 120° au moins de la circonférence du cylindre et passe en ligne droite d'un cylindre guide-fils à un autre, donc sans passer par un organe de guidage tel qu'un cylindre de guidage ou de déviation, on obtient un angle de croisement élevé des nappes et un très bon alignement et un parallélisme optimal des fils d'une nappe. L'invention permet donc de réaliser un dispositif de sciage par fil performant ayant une productivité élevée, une précision moyenne accrue par la diminution des défauts géométriques et la diminution des tensions internes dans la pièce à scier (souvent d'un matériau très sensible aux efforts extérieurs) en cours de sciage.

Favorablement, cet angle d'inclinaison est déterminé et réglé en fonction de la distance séparant deux gorges voisines sur les cylindres guide-fils, du diamètre de ces derniers et de la distance séparant ces derniers.

Lors d'un changement d'un de ces trois paramètres, il y aura donc lieu d'ajuster l'angle d'inclinaison, ce qui permettra d'obtenir à nouveau des tranches à faces exactement parallèles.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution et des variantes.

La figure 1 illustre en perspective le principe de l'invention.

La figure 2 illustre un mode d'exécution avec deux cylindres guide-fils.

La figure 3 est une vue en plan perpendiculaire aux cylindres guide-fils.

La figure 4a est une vue latérale d'un cylindre guide-fils incliné et la figure 4b est une vue en plan des cylindres guide-fils inclinés de façon que les projections des fils apparaissent parallèles.

La figure 5 est une vue frontale des deux cylindres guide-fils.

Les figures 6 à 8 montrent trois variantes possibles pour effectuer un angle d'inclinaison entre la direction de déplacement de la pièce à scier et une perpendiculaire au plan de travail.

Les figures 9a à 9c illustrent schématiquement l'enroulement du fils sur les cylindres guide-fils dans trois variantes.

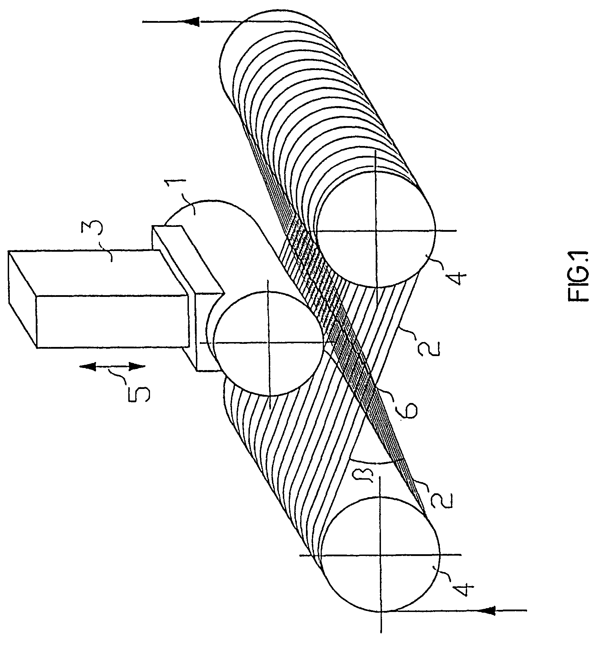

La figure 1 illustre en perspective la pièce à scier 1 mise en appui contre les nappes de fils croisées 2 supportées par les cylindres guide-fils 4. La table support 3 sur laquelle est fixée la pièce à scier 1 se déplace selon la direction 5. Le croisement des nappes se fait selon la droite 6 avec un angle β.

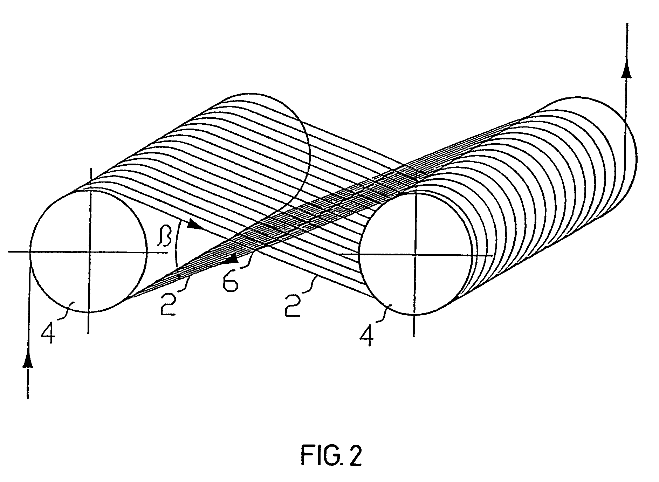

La figure 2 illustre l'enroulement du fil 2 sur les cylindres guide-fils 4. Le fil 2 passe sur la partie supérieure du premier cylindre à gauche, rejoint en ligne droite la partie inférieure du second cylindre, est enroulé sur la circonférence de ce second cylindre sur au moins un angle de 120°, ici environ 200°, pour retourner en ligne droite vers la partie inférieure du premier cylindre où il occupe également environ 200° de la circonférence de ce cylindre et ainsi de suite. Par cet enroulement en huit, il se forme donc deux nappes de fils 2 dont les fils s'étendent d'un cylindre à l'autre en ligne droite sans être déviés par un organe de guidage ou de déviation et en se croisant avec un angle β non nul qui est en tous cas supérieur à 20° pour constituer un enroulement régulier en huit. L'angle β est déterminé par le diamètre des cylindres 4 et l'espacement séparant les axes des derniers.

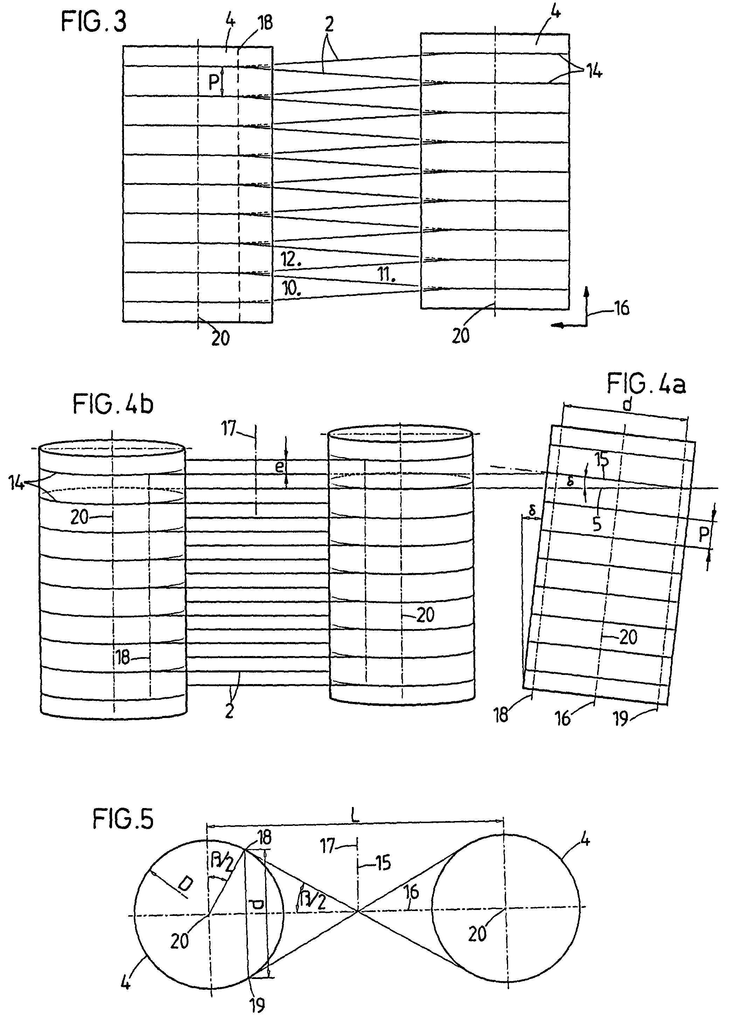

La figure 3 montre une vue en plan perpendiculaire au plan de travail 16 déterminé par les axes 20 des deux cylindres guide-fils 4.

Il apparaît que des tranches 10,11,12, etc, sciées avec une direction de déplacement 5 de la pièce à scier qui correspond à une perpendiculaire 15 au plan de travail possèdent des faces non parallèles en coin.

Lorsqu'on désire obtenir des tranches à faces parallèles, il est donc nécessaire de modifier l'angle entre ladite direction de déplacement 5 et la perpendiculaire au plan de travail 16. Ceci peut être obtenu en ajustant un angle d'inclinaison prédéterminé δ entre la direction de déplacement 5 et la perpendiculaire 15 au plan de travail 16, comme cela est visible à la figure 4a. Cet angle d'inclinaison prédéterminé δ est compris dans un plan de réglage 17 qui est perpendiculaire au plan de travail 16 et parallèle aux axes des deux cylindres guide-fils 4. Cet angle δ peut être déterminé par la formule

$$\delta = \arctan \frac{P}{2d}$$

où P = distance séparant deux gorges 14 voisines sur les cylindres guide-fils 4;

d = distance séparant les droites supérieure et inférieure 18, 19 joignant les points de contact tangentiels des deux nappes sur un cylindre guide-fils 4.

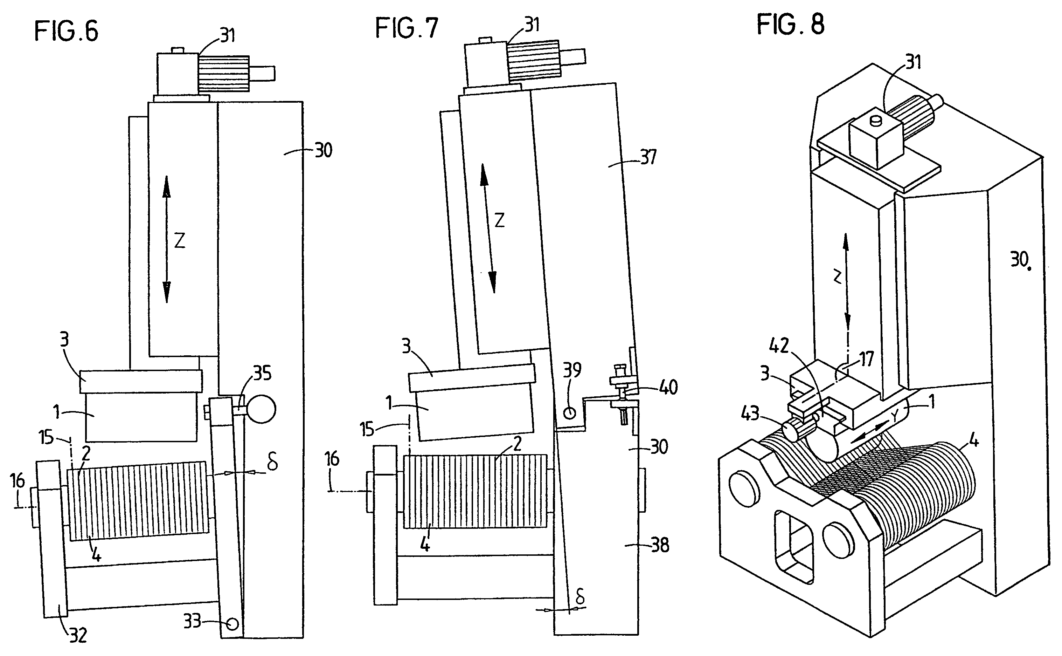

Conformément à la figure 5, la distance d est donnée par la formule

$$d = D \times \cos\left(\arcsin \frac{D}{L}\right) = D \times \left(1 - \frac{D^2}{L^2}\right)^{1/2}$$

où D = diamètre des cylindres guide-fils 4;

L = distance séparant les axes 20 des cylindres guide-fils 4.

Ainsi, dans le cas de la figure 4b, la direction de déplacement 5 est perpendiculaire à la feuille et la perpendiculaire 15 au plan de travail 16 est inclinée d'un angle δ prédéterminé par rapport à la direction de déplacement 5. De même, les axes 20 des cylindres guide-fils sont inclinés d'un angle δ par rapport au plan de la feuille. Dans cette position, les fils des deux nappes 2 apparaissent parallèles en projection, et les tranches obtenues possèdent donc bien deux faces parallèles.

Dans le cas des applications et des machines les plus usuelles, l'angle d'inclinaison δ est très petit de l'ordre de 20'.

L'épaisseur e des tranches obtenues correspond sensiblement à la moitié de celle obtenue avec une nappe de fils simple non croisée d'un écartement P :

$$e = P/2 \cos \delta - ef$$

où ef = épaisseur du fil enduit d'abrasif.

Ainsi, en appliquant un angle d'inclinaison δ correspondant à des valeurs de P, D et L prédéterminées, il est possible d'obtenir avec des nappes de fils croisées des tranches sciées à faces parfaitement parallèles.

L'angle d'inclinaison δ une fois calculé pourra être appliqué au dispositif de sciage de différentes façons,

- par inclinaison du plan de travail, le déplacement de la table support restant inchangé, par exemple vertical,
- par inclinaison mécanique de la direction de déplacement de la table support et de la pièce à scier, le plan de travail restant fixe, par exemple horizontal,
- par déplacements simultanés et commandés de la pièce à scier suivant une direction Y parallèle aux axes 20 des cylindres guide-fils 4 et suivant la direction Z verticale perpendiculaire au plan de sciage, les vitesses des déplacements Z et Y étant contrôlées de façon à correspondre à une avance de la pièce à scier correspondant à l'angle d'inclinaison δ.

Le dispositif de sciage représenté à la figure 6 possède un châssis 30 sur lequel est monté de façon coulissante la table support 3 portant la pièce à scier 1. Un moteur 31 permet de déplacer la table support 3 suivant une direction verticale invariable Z.

Les cylindres guide-fils 4 sont montés sur un cadre 32 qui est articulé grâce à un arbre de pivotement 33 perpendiculaire audit plan de réglage sur le châssis 30. Un mécanisme de réglage 35 à vis micrométrique permet d'ajuster de façon exacte l'angle d'inclinaison δ de la normale 15 au plan de travail 16 par rapport à la verticale Z. Cet angle d'inclinaison δ restera inchangé pour des valeurs de P, D et L données.

Dans la variante représentée à la figure 7, la normale 15 au plan de sciage est fixe. Par contre, le châssis 30 comprend une partie supérieure 37 qui est montée pivotante à un socle 38 grâce à un arbre d'articulation 39 perpendiculaire audit plan de réglage. Un mécanisme de réglage 40 à vis micrométrique permet d'ajuster de façon précise l'angle d'inclinaison δ de la direction de déplacement Z par rapport à la normale 15 au plan de travail 16. On obtient ainsi également des tranches à faces parfaitement parallèles avec des nappes croisées.

La variante d'exécution de la figure 8 possède un châssis fixe 30 sur lequel est montée une table support 3 déplaçable suivant une direction verticale invariable Z. Les deux cylindres guide-fils 4 comportent également des axes fixes non inclinables.

La pièce à scier 1 est montée sur une table coulissante 42 qui peut être déplacée grâce à un moteur 43 suivant une direction Y parallèle aux axes des cylindres guide-fils 4. Le déplacement suivant la direction Y est précisément contrôlé pour engendrer une avance combinée suivant les directions Z et Y de la pièce à scier dans le plan de réglage 17 correspondant exactement à l'angle d'inclinaison δ qui est donné par la relation :

$$\tan \delta = \frac{V_Y}{V_Z}$$

où $V_Y$ et $V_Z$ sont les vitesses de déplacement selon les directions Y et Z.

Il est bien entendu que le déplacement suivant Y est bien plus petit que celui suivant Z, par exemple 170 fois plus petit. Néanmoins, ce déplacement précisément contrôlé suivant Y est nécessaire pour obtenir des tranches comportant des faces parallèles.

Il est bien entendu possible de trouver d'autres mécanismes permettant d'établir exactement l'angle d'inclinaison δ.

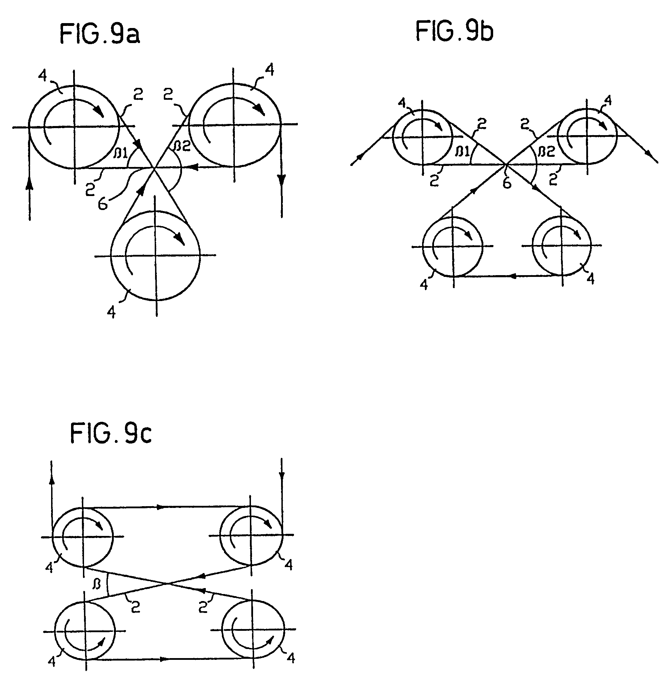

Les figure 9a à 9c montrent d'autres types de croisement de nappes à plus de deux cylindres guide-fils.

La figure 9a représente en vue latérale un croisement multiple de trois nappes de fils 2 au point 6 en utilisant trois cylindres guide-fils 4. Les nappes de fils 2 se croisent avec des angles β1 et β2. Le fil 2 passe autour du cylindre gauche supérieur, rejoint en ligne droite le cylindre inférieur pour remonter sur le cylindre droit supérieur et retourne ensuite en ligne droite vers le cylindre gauche supérieur. Le fil est enroulé sur chacun des cylindres sur un angle de 240° environ de la circonférence et forme ainsi trois nappes de fils se croisant selon une seule droite.

La figure 9b représente en vue latérale un croisement multiple de trois nappes de fils 2 entre quatre cylindres guide-fils 4. Les nappes de fils 2 se croisent au point 6 avec des angles β1 et β2.

La figure 9c représente en vue latérale une possibilité de réaliser un croisement de deux nappes de fils 2 entre quatre cylindres guide-fils 4. Le croisement 6 se fait avec un angle β. Le fil est enroulé sur chacun des quatre cylindres sur un angle de 180° permettant ainsi un bon guidage et parallélisme des fils des deux nappes. En outre, ce type d'enroulement ne nécessite pas de corrections de l'angle d'inclinaison δ.

Le fil de sciage formant les nappes croisées de fils 2 entre les cylindres guide-fils 4 est constituée d'acier à ressort d'un diamètre compris entre 0,1 et 0,2 mm afin de scier des blocs de matériaux durs ou de composition plus particulière, tels que silicium, céramique, composés des éléments des groupes III-V, GGG (Grenats à Gadolinium-Gallium), saphir, etc, en tranches de 0,1 à 5 mm d'épaisseur environ. L'agent abrasif est un produit du commerce et peut être du diamant, du carbure de silicium, de l'alumine, etc, sous forme fixée au fil ou sous forme libre en barbotine.

Le concept de nappes de fils croisées sans organe de déviation supplémentaire agissant sur les fils et intégré au dispositif de sciage par fil permet de réaliser un ensemble plus performant et produisant des tranches de meilleure qualité de par le croisement simple ou multiple de nappes de fils 2 entre deux ou plus cylindres guide-fils fixes ou mobiles, sans que cela soit au détriment des coûts d'exploitation ou de la productivité.

Il est bien entendu que les modes de réalisation décrits ci-dessus ne présentent aucun caractère limitatif et qu'ils peuvent recevoir toutes modifications désirables à l'intérieur du cadre tel que défini par la revendication 1. En particulier, d'autres types de croisements de nappes de fils 2 peuvent être envisagés qui par la position des nappes de fils 2 par rapport à la direction de la découpe réalisent sur les surfaces de part et d'autre des tranches des inclinaisons différentes des ondulations dues aux mouvements thermiques ou mécaniques du dispositif de sciage par fil. Par exemple, l'enroulement du fil autour d'un nombre de plus de deux cylindres guide-fils 4 peut générer trois nappes de fils 2 différentes donnant lieu à un croisement multiple, qui peut se générer selon une ou plusieurs droites. Les différentes nappes de fils 2 peuvent se croiser suivant une même droite ou éventuellement se croiser de manière indépendante deux à deux en des droites différentes. L'enroulement du fil 2 sur les cylindres guide-fils 4 peut être complet ou partiel. Il est cependant supérieur à 120° et de préférence idéalement supérieur à 150° de façon à obtenir un excellent maintien du fil sur les cylindres, donc un parallélisme optimal des fils d'une nappe.

D'autres combinaisons peuvent également satisfaire au concept de nappes de fils 2 croisées en conservant l'idée de l'invention de minimiser les efforts de cisaillement induits par la découpe des tranches sur le support de la pièce à scier 1 et de créer de part et d'autre de la surface des tranches une orientation différente, donc croisée, des défauts éventuellement induits par les mouvements non contrôlés du dispositif de sciage par fil. Il est également possible d'imaginer des dispositifs de sciage par fil dont les cylindres guide-fils 4 sont déplaçables grâce à des moyens permettant de varier l'angle de croisement β entre les nappes de fils 2, soit de manière fixe soit continue en cours de travail. Une position avec un angle de croisement pratiquement nul facilite par exemple le chargement automatique du fil, l'angle entre les nappes de fils étant alors donné après la génération des nappes de fils 2 par le déplacement relatif des cylindres guide-fils 4. Ces moyens, par exemple des vérins agissant sur l'axe d'au moins un des cylindres guide-fils, pourraient être actionnées manuellement, électriquement, pneumatiquement ou hydrauliquement.

## Revendications

1. Dispositif de sciage par fil comprenant au moins deux cylindres guide-fils (4) supportant un fil (2) maintenu en position grâce à des gorges prévues sur la surface desdits cylindres guide-fils (4) qui définissent l'intervalle entre les fils d'une nappe de fils, le fil étant susceptible de se déplacer selon un mouvement alternatif ou continu en appui contre une pièce à scier (1) fixée sur une table support (3), l'enroulement du fil autour des cylindres guide-fils (4) générant au moins deux nappes de fils qui se croisent au moins selon une ligne (6) avec un angle (β) non nul, le fil étant enroulé sur chacun des cylindres guide-fils (4) sur 120° au moins de la circonférence du cylindre, **caractérisé par le fait qu'**il comprend des moyens (31) pour effectuer un déplacement relatif (5) entre la pièce à scier (1) et les nappes de fils (2) suivant une direction de déplacement relatif (Z;YZ) et des moyens de réglage (35,40,43) pour régler l'angle d'inclinaison (δ) compris entre ladite direction (Z;YZ) dudit déplacement relatif (5) et une perpendiculaire (15) à un plan de travail (16) dans lequel sont contenus les axes (20) de deux cylindres guide-fils (4) voisins, cet angle d'inclinaison (δ) étant déterminé et ajusté de façon à obtenir des tranches à faces parallèles.

2. Dispositif selon la revendication 1, **caractérisé par le fait qu'**il comprend deux cylindres guide-fils (4) et que le fil est enroulé sur les deux cylindres guide-fils en passant de la partie supérieure d'un premier cylindre guide-fils en ligne droite à la partie inférieure du second cylindre guide-fils pour retourner de la partie supérieure de ce dernier en ligne droite vers la partie inférieure du premier guide-fils de façon à constituer un enroulement en huit formant deux nappes de fils (2) se croisant avec ledit angle (β).

3. Dispositif selon la revendication 1, **caractérisé par le fait que** les moyens de réglage (35,40,43) sont agencés de façon à régler ledit angle d'inclinaison (δ) dans un plan de réglage (17) qui est perpendiculaire au plan de travail (16) et parallèle aux axes (20) des deux cylindres guide-fils (4) voisins.

4. Dispositif selon la revendication 3, **caractérisé par le fait que** ledit angle d'inclinaison (δ) est déterminé et réglé en fonction de la distance (P) séparant deux gorges (17) voisines sur les cylindres guide-fils (4), du diamètre (D) de ces derniers et de la distance (L) séparant ces derniers.

**5.** Dispositif selon la revendication 4, **caractérisé par le fait que** l'angle d'inclinaison (δ) est déterminé et réglé selon la formule

$$\delta = \text{arc tan}\ \frac{P}{2d}$$

P étant la distance séparant deux gorges (14) voisines des cylindres guide-fils (4);
d étant la distance séparant les droites supérieure et inférieure (18,19) joignant les points de contact tangentiels des deux nappes croisées sur un cylindre guide-fils (4);
d étant déterminé par la formule :

$$d = D \times \cos\ (\text{arc sin}\ \frac{D}{L})$$

où D est le diamètre des cylindres guide-fils (4) et L est la distance séparant les axes de ces derniers.

**6.** Dispositif selon l'une des revendications 3 à 5, **caractérisé par le fait que** les moyens de réglage comportent un mécanisme (35) agencé de façon à tourner l'ensemble des cylindres guide-fils (4) autour d'un axe d'articulation (33) perpendiculaire audit plan de réglage (17).

**7.** Dispositif selon l'une des revendications 3 à 5, **caractérisé par le fait que** les moyens de réglage comportent un mécanisme (40) agencé de façon à tourner ladite direction (Z) du déplacement relatif (5) autour d'un axe d'articulation (39) perpendiculaire audit plan de réglage (17).

**8.** Dispositif selon l'une des revendications 3 à 5, **caractérisé par le fait que** les moyens de réglage comportent un mécanisme (43) agencé de façon à déplacer la pièce à scier (1) dans ledit plan de réglage (17) suivant une direction (Y) perpendiculaire à ladite direction (Z) du déplacement relatif.

**9.** Dispositif selon la revendication 1 ou 2, **caractérisé par le fait que** ledit angle (β) est déterminé par le diamètre des cylindres guide-fils (4) et l'espacement séparant les axes des derniers.

**10.** Dispositif selon l'une des revendications 1, 2 ou 9, **caractérisé par le fait que** ledit angle (β) est d'au moins 20°.

**11.** Dispositif de sciage selon la revendication 1, **caractérisé en ce qu'**il comprend des moyens pour modifier ledit angle (β) de croisement des nappes de fils (2).

**12.** Dispositif de sciage selon la revendication 11, **caractérisé en ce que** les moyens pour modifier l'angle (β) sont agencés pour déplacer au moins un cylindre guide-fils (4).

**13.** Dispositif de sciage selon la revendication 1, **caractérisé en ce qu'**il comprend au moins trois nappes de fils (2) se croisant suivant une même droite (6).

**14.** Dispositif de sciage selon la revendication 1, **caractérisé en ce qu'**il comprend au moins trois nappes de fils (2) se croisant deux à deux suivant des droites différentes.

**15.** Dispositif selon la revendication 11 ou 12, **caractérisé en ce que** les moyens pour modifier l'angle (β) de croisement des nappes de fils (2) sont actionnés manuellement, électriquement, pneumatiquement ou hydrauliquement.

**Patentansprüche**

**1.** Drahtsägevorrichtung, die zumindest zwei drahtführende Zylinder (4) aufweist, welche einen Draht (2) halten, der mittels auf der Oberfläche der besagten drahtführenden Zylinder (4) vorgesehener Rillen, die das Intervall zwischen den Drähten einer Schicht von Drähten definieren, in Position gehalten wird, wobei der Draht geeignet ist, sich gemäß einer alternierenden oder kontinuierlichen Bewegung aufdrückend auf ein zu sägendes Stück (1), das auf einem Haltetisch (3) befestigt ist, zu verschieben, wobei die Wicklung des Drahts auf die drahtführenden Zylinder (4) zumindest zwei Schichten von Drähten erzeugt, die sich zumindest entlang einer Linie (6) unter einem von Null verschiedenen Winkel (â) kreuzen, wobei der Draht auf jedem der drahtführenden Zylinder (4) auf zumindest 120° des Umfanges des Zylinders aufgewickelt ist, **dadurch gekennzeichnet, daß** sie Mittel (31) aufweist, um eine Relatiwerschiebung (5) zwischen dem zu sägenden Stück (1) und den Schichten von Drähten (2) entlang einer Richtung der Relatiwerschiebung (Z; YZ) auszuführen, und Einstellungsmittel (35, 40, 43) zur Einstellung des Neigungswinkels (ä) zwischen besagter Richtung (Z; YZ) der besagten Relatiwerschiebung (5) und einer Senkrechten (15) auf eine Arbeitsebene (16), in welcher die Achsen (20) von zwei benachbarten drahtführenden Zylindern (4) liegen, wobei dieser Neigungswinkel (ä) derart bestimmt und eingestellt wird, daß Scheiben mit parallelen Seiten erhalten werden.

**2.** Vorrichtung gemäß dem Anspruch 1, **dadurch gekennzeichnet, daß** sie zwei drahtführende Zylinder (4) aufweist, und daß der Draht auf den zwei drahtführenden Zylindern aufgewickelt ist, indem er vom oberen Teil eines ersten drahtführenden Zylinders in gerader Linie zum unteren Teil des zweiten drahtführenden Zylinders verläuft, um vom oberen Teil dieses letzteren in gerader Linie zum unteren Teil des ersten Drahtführers zurückzukehren, derart, daß eine Wicklung in Form einer Acht erzeugt wird, welche zwei Schichten von Drähten (2) bildet, die sich unter besagtem Winkel (â) kreuzen.

3. Vorrichtung gemäß dem Anspruch 1, **dadurch gekennzeichnet, daß** die Einstellungsmittel (35, 40, 43) derart gestaltet sind, daß besagter Neigungswinkel (ä) in einer Einstellungsebene (17) eingestellt wird, die senkrecht auf die Arbeitsebene (16) und parallel zu den Achsen (20) der zwei benachbarten drahtführenden Zylindern (4) ist.

4. Vorrichtung gemäß dem Anspruch 3, **dadurch gekennzeichnet, daß** besagter Neigungswinkel (ä) in Abhängigkeit von der Entfernung (P) zwischen zwei benachbarten Rillen (14) auf den drahtführenden Zylindern (4), vom Durchmesser (D) dieser letzteren und von der Entfernung (L) zwischen diesen letzteren bestimmt und eingestellt wird.

5. Vorrichtung gemäß dem Anspruch 4, **dadurch gekennzeichnet, daß** der Neigungswinkel (ä) gemäß der Formel

$$ä = arc \ tan \ P/2d$$

bestimmt und eingestellt wird, wobei
P die Entfernung zwischen zwei benachbarten Rillen (14) der drahtführenden Zylinder (4) ist;
d die Entfernung zwischen den oberen und unteren Geraden (18, 19), welche an den tangentialen Berührungspunkten der zwei gekreuzten Schichten auf einem drahtführenden Zylinder (4) anliegen, ist; wobei d bestimmt wird gemäß der Formel:

$$d = D \ x \ cos \ (arc \ sin \ D/L)$$

wo D der Durchmesser der drahtführenden Zylinder (4) und L die Entfernung zwischen den Achsen dieser letzteren ist.

6. Vorrichtung gemäß einem der Ansprüche 3 bis 5, **dadurch gekennzeichnet, daß** die Einstellungsmittel einen derart gestalteten Mechanismus (35) aufweisen, daß er die Gesamtheit der drahtführenden Zylinder (4) um eine Drehachse (33), die senkrecht zu besagter Einstellungsebene (17) steht, dreht.

7. Vorrichtung gemäß einem der Ansprüche 3 bis 5, **dadurch gekennzeichnet, daß** die Einstellungsmittel einen derart gestalteten Mechanismus (40) aufweisen, daß er die besagte Richtung (Z) der Relativverschiebung (5) um eine Drehachse (39), die senkrecht zu besagter Einstellungsebene (17) steht, dreht.

8. Vorrichtung gemäß einem der Ansprüche 3 bis 5, **dadurch gekennzeichnet, daß** die Einstellungsmittel einen derart gestalteten Mechanismus (43) aufweisen, daß er das zu sägende Stück (1) in der besagten Einstellungsebene (17) entlang einer Richtung (Y), die senkrecht zu der besagten Richtung (Z) der Relativverschiebung steht, verschiebt.

9. Vorrichtung gemäß dem Anspruch 1 oder 2, **dadurch gekennzeichnet, daß** der besagte Winkel (â) durch den Durchmesser der drahtführenden Zylinder (4) und die die Achsen der letzteren trennende Entfernung bestimmt wird.

10. Vorrichtung gemäß einem der Ansprüche 1, 2 oder 9, **dadurch gekennzeichnet, daß** der besagte Winkel (â) zumindest 20° beträgt.

11. Sägevorrichtung gemäß dem Anspruch 1, **dadurch gekennzeichnet, daß** sie Mittel aufweist, um den besagten Kreuzungswinkel (â) der Schichten von Drähten (2) zu ändern.

12. Sägevorrichtung gemäß dem Anspruch 11, **dadurch gekennzeichnet, daß** die Mittel zur Änderung des Winkels (â) dazu geeignet sind, zumindest einen drahtführenden Zylinder (4) zu verschieben.

13. Sägevorrichtung gemäß dem Anspruch 1, **dadurch gekennzeichnet, daß** sie zumindest drei Schichten von Drähten (2) aufweist, die sich entlang ein und derselben Gerade (6) kreuzen.

14. Sägevorrichtung gemäß dem Anspruch 1, **dadurch gekennzeichnet, daß** sie zumindest drei Schichten von Drähten (2) aufweist, die sich jeweils zu zweit entlang verschiedener Geraden kreuzen.

15. Vorrichtung gemäß dem Anspruch 11 oder 12, **dadurch gekennzeichnet, daß** die Mittel, um den Kreuzungswinkel (â) der Schichten von Drähten (2) zu ändern, manuell, elektrisch, pneumatisch oder hydraulisch angetrieben werden.

**Claims**

1. Wire sawing device comprising at least two wire guide cylinders (4) supporting a wire (2) held in position by grooves provided on the surface of said wire guide cylinders (4) which define the spacing between the wires of a layer of wires, the wire being adapted to be displaced by reciprocating or continuous movement while bearing against a piece (1) to be sawed fixed on a support table (3), the winding of the wire about the wire guide cylinders (4) producing at least two layers of wires which cross along at least one line (6) with an angle (β) different from zero, the wire being wound about each of the wire guide cylinders (4) by at least 120° about the circumference of the cylinder, **characterized by** the fact that it comprises means (31) to produce a relative displacement (5) between the piece (1) to be sawed and the layers of wires (2) according to a direction of relative movement (Z;YZ) and adjustment means (35, 40, 43) to adjust the angle of inclination (δ) comprised between the direction (Z;YZ) of said relative movement (5) and a perpendicular (15) to a working plane (16) in which are contained the axes (20) of two adjacent wire guide cylinders (4), this angle of inclination (δ) being determined and adjusted so as to obtain slices with parallel surfaces.

2. Device according to claim 1, **characterized by** the fact that it comprises two wire guide cylinders (4) and that the wire is wound on the two wire guide cylinders while passing from the upper portion of a first wire guide cylinder in a straight line to the lower portion of the second wire guide cylinder and then returning from the upper portion of this latter in a straight line toward the lower portion of the first wire guide cylinder so as to constitute a figure eight winding forming two layers of wires (2) crossing at said angle (β).

3. Device according to claim 1, **characterized by** the fact that the adjustment means (35,40,43) are arranged so as to adjust said angle of inclination (δ) in an adjustment plane (17) which is perpendicular to the working plane (16) and parallel to the axes (20) of the adjacent wire guide cylinders (4).

4. Device according to claim 3, **characterized by** the fact that said angle of inclination (δ) is determined and adjusted as a function of the distance (P) separating two adjacent grooves (17) on the wire guide cylinders (4), of the diameter (D) of these latter, and of the distance (L) separating these latter.

5. Device according to claim 4, **characterized by** the fact that the angle of inclination (δ) is determined and adjusted according to the formula

$$(\delta) = \arctan \frac{P}{2d}$$

P being the distance separating two adjacent grooves (14) on the wire guide cylinders (4); D being the distance separating the upper and lower straight lines (18, 19) joining the points of tangent contact of the two crossed layers on a wire guide cylinder (4); D being determined by the formula :

$$D = D \times \cos \left( \arcsin \frac{D}{L} \right)$$

in which D is the diameter of the wire guide cylinders (4) and L is the distance separating the axes of these latter.

6. Device according to one of claims 3 to 5, **characterized by** the fact that the adjustment means comprise a mechanism (35) arranged so as to turn the assembly of the wire guide cylinders (4) about an axis of articulation (33) perpendicular to said adjustment plane (17).

7. Device according to one of claims 3 to 5, **characterized by** the fact that the adjustment means comprise a mechanism (40) arranged so as to turn said direction (Z) of the relative displacement (5) about an axis (39) of articulation perpendicular to said working plane (17).

8. Device according to one of claims 3 to 5, **characterized by** the fact that the adjustment means comprise a mechanism (43) arranged so as to move the piece (1) to be sawed in said adjustment plane (17) in a direction (Y) perpendicular to said direction (Z) of relative displacement.

9. Device according to claim 1 or 2, **characterized by** the fact that said angle (β) is determined by the diameter of the wire guide cylinders (4) and the spacing separating the axes of the latter.

10. Device according to one of claims 1, 2 or 9, **characterized by** the fact that said angle (β) is at least 20°.

11. Sawing device according to claim 1, **characterized in that** it comprises means to modify said angle (β) of crossing of the layers of wires (2).

12. Sawing device according to claim 11, **characterized in that** the means to modify the angle (β) are arranged to move at least one wire guide cylinder (4).

13. Sawing device according to claim 1, **characterized in that** it comprises at least three layers of wires (2) crossing at a single straight line (6).

14. Sawing device according to claim 1, **characterized in that** it comprises at least three layers of wires (2) crossing two-by-two along different straight lines.

15. Device according to claim 11 or 12, **characterized**

**in that** the means to modify the angle (β) of crossing of the layers of wires (2) are actuated manually, electrically, pneumatically or hydraulically.

FIG.1

FIG. 2

FIG.3

FIG.4b

FIG.4a

FIG.5

FIG. 8

FIG.7

FIG.6

FIG.9a

FIG.9b

FIG.9c